# EUROPÄISCHE PATENTSCHRIFT

(11) **EP 3 775 435 B1**
(45) Veröffentlichungstag und Bekanntmachung des Hinweises auf die Patenterteilung: **12.07.2023**
(21) Anmeldenummer: 19716832.1
(22) Anmeldetag: 01.04.2019
(51) Int. Cl.: E04G 21/32, E04G 11/20, E04G 11/28

(54) **SELBSTKLETTERSYSTEM MIT ANTRIEB ÜBER EIN UMLAUFENDES ANTRIEBSMITTEL UND VERFAHREN ZUM BETRIEB EINES SELBSTKLETTERSYSTEMS**
SELF-CLIMBING SYSTEM WITH DRIVE VIA A CIRCULATING DRIVE MEANS, AND METHOD FOR OPERATING A SELF-CLIMBING SYSTEM
SYSTÈME AUTO-GRIMPANT À ENTRAÎNEMENT PAR L'INTERMÉDIAIRE D'UN MOYEN D'ENTRAÎNEMENT ROTATIF ET PROCÉDÉ POUR FAIRE FONCTIONNER UN SYSTÈME AUTO-GRIMPANT

(30) Priorität: 03.04.2018 DE 102018204961
(43) Veröffentlichungstag der Anmeldung: 17.02.2021
(73) Patentinhaber: PERI SE, 89264 Weißenhorn (DE)
(72) Erfinder: SCHMID, Josef, 88481 Balzheim (DE)
(74) Vertreter: K & H Bonapat Patentanwälte Koch · von Behren & Partner mbB
(86) Internationale Anmeldenummer: PCT/EP2019/058132
(87) Internationale Veröffentlichungsnummer: WO 2019/192946

(56) Entgegenhaltungen:
- EP-A2- 0 034 819
- CN-A- 105 625 704
- DE-A1- 19 920 164
- KR-B1- 100 746 551
- KR-B1- 101 646 892

## Beschreibung

Die Erfindung betrifft ein Selbstklettersystem, insbesondere ein Selbstkletterschalungssystem, umfassend wenigstens eine an wenigstens zwei Kletterschuhen, insbesondere einem oberen und einem unteren Kletterschuh, geführte Kletterschiene, wobei die Kletterschuhe an und/oder auf einem ausgehärteten Betonierabschnitt befestigbar sind, und einen Aktuator.

Ein Klettersystem ist beispielsweise in Form des "RCS Schienenklettersystem" der Peri GmbH, Weißenhorn, Deutschland, bekannt geworden (http://www.peri.de/produkte/schalungssysteme/rcs-schienenklettersystem.html; Abruf am 25.09.2017).

Ein solches Schienenklettersystem ermöglicht ein vertikales, schienengeführtes Klettern von Klettereinheiten, die beispielsweise Schalungselemente, Arbeitsbühnen und/oder Abdeckungen umfassen, entlang einer schrittweise zu erstellenden Wandfläche über mehrere Geschosse hinweg. Üblicherweise ist die zu erstellende Wandfläche als ausgehärteter Betonierabschnitt ausgebildet.

Zum Klettern wird die Klettereinheit mitsamt einer oder mehrerer zugehöriger Kletterschienen, beispielsweise hydraulisch oder mittels eines Krans, von einem unteren Geschoss zu einem anderen, höhergelegenen Geschoss verschoben. Bei den bekannten Systemen stützt sich dazu beispielsweise ein hydraulischer Aktuator jeweils an einem an der zu überkletternden Wand eines unteren Geschosses montierten Kletterschuh ab, um die Kletterschiene nach oben bzw. in die gewünschte Kletterrichtung zu schieben.

Anschließend kann der Aktuator demontiert und an einem an einer Wand eines höhergelegenen Geschosses (sofern nach oben geklettert werden soll) erneut montiert werden, so dass der Klettervorgang fortgesetzt werden kann. Während des Kletterns werden die Kletterschienen dabei jeweils in den Kletterschuhen geführt. Nach Erreichen des gewünschten Geschosses, d. h. nach Abschluss eines Klettervorgangs, können die Kletterschienen in oder an den Kletterschuhen, beispielsweise mittels eines Bolzens festgelegt werden, um ein unbeabsichtigtes Zurückrutschen auszuschließen.

Ein Kletterschuh einer Kletterschalung ist beispielsweise aus der WO 2007/000136 A1 bekannt. In KR 100 746 551 B1 ist ein Konstruktionsverfahren zum Erklimmen einer Form eines Gebäudes beschrieben, um eine Betonwand einfach und stabil zu konstruieren, indem eine Stahlschalung mit einem einfachen Verfahren unter Verwendung eines Formklettersystems gebildet wird. Ein Aktuator des Formklettersystems ist ortsfest gegenüber einem Kletterschuh angeordnet. In EP 0 034 819 A1 ist ein umsetzbares, an einer Bauwerkswand verankertes Gerüst mit mindestens zwei parallel zueinander angeordneten Gerüstrahmen beschrieben mit mindestens einer, an der Wand befestigten Halterung für jeden Gerüstrahmen. Zur Kraftübertragung auf das Gerüst dient ein Seil, das an einem Ende mit einer Hubeinrichtung, wie z.B. an einer Traverse oder einem Kran verbunden werden kann.

Nachteilig bei den bekannten Klettersystemen ist jedoch, dass lediglich diskontinuierlich geklettert werden kann; insbesondere sind umfangreiche manuelle Eingriffe, beispielsweise beim Umsetzen des bzw. der Aktuatoren, erforderlich. Bei Verwendung mehrerer, parallel angeordneter Kletterschienen, insbesondere bei Verwendung mehrerer Klettereinheiten, die beispielsweise rings um ein zu errichtendes Gebäude herum angeordnet sind, ist eine synchrone Verschiebung der Klettereinheiten erheblich erschwert. Dadurch können während des Kletterns Gefahrenzonen, insbesondere Absturzstellen, entstehen.

Ferner können bei den bekannten Klettersystemen lediglich geringe Klettergeschwindigkeiten erzielt werden. Werden beispielsweise Hubzylinder als Aktuatoren eingesetzt, so sind regelmäßige Rückhübe erforderlich.

Oftmals ergibt sich konstruktionsbedingt eine Hauptkletterrichtung. Ein Klettern in entgegengesetzter Richtung ist dann nur sehr schwer und/oder mit großem Aufwand möglich. Beispielsweise erfordert ein Zurückklettern bei Abrissarbeiten oftmals einen besonders großen Aufwand. Auch weisen Hubzylinder, insbesondere Hubspindeln, eine große Reibung auf, wodurch sich bedeutende Reibungsverluste ergeben. Die Aktuatoren können ferner oftmals nur unzureichend gegen eine bei Baustellen allgegenwärtige Verschmutzung geschützt werden.

Aufgabe der Erfindung ist es daher, ein alternatives, verbessertes Selbstklettersystem sowie ein Verfahren zum Betrieb eines Selbstklettersystems anzubieten, die ein neuartiges Kletterprinzip verwirklichen. Gelöst wird die Aufgabe durch ein Selbstklettersystem, insbesondere ein Selbstkletterschalungssystem, umfassend wenigstens eine an wenigstens zwei Kletterschuhen, insbesondere einem oberen und einem unteren Kletterschuh, geführte Kletterschiene, wobei die Kletterschuhe an und/oder auf einem ausgehärteten Betonierabschnitt befestigbar sind, und einen an der Kletterschiene angeordneten Aktuator, wobei entlang der Kletterschiene zumindest über einen Längenabschnitt der Kletterschiene ein umlaufendes Antriebsmittel angeordnet ist, das mittels des Aktuators relativ zur Kletterschiene bewegbar und mittels wenigstens einer Fixiervorrichtung des Selbstklettersystems für das Antriebsmittel wahlweise im Bereich eines Kletterschuhs und/oder in dem Kletterschuh blockierbar oder entriegelbar ist, wobei, wenn das Antriebsmittel relativ zu einem der Kletterschuhe des Selbstklettersystems festgelegt ist, eine Bewegung des Antriebsmittels in seiner Längsrichtung relativ zu dem Kletterschuh verhindert ist und relativ zu der Kletterschiene das Antriebsmittel in seinem relativ zum Kletterschuh festgelegten Zustand bewegbar bleibt.

Ein wesentlicher Gedanke der Erfindung besteht somit darin, dass eine Kletterschiene vorgesehen wird, an der ein umlaufendes Antriebsmittel angeordnet ist. Weiter umfasst das Selbstklettersystem wenigstens zwei Kletterschuhe. Der Längenabschnitt der Kletterschiene mit dem Antriebsmittel kann von den Kletterschuhen umgriffen oder in den Kletterschuhen aufgenommen werden. Durch die Fixiervorrichtung kann das Antriebsmittel im Bereich eines der Kletterschuhe und/oder in einem der Kletterschuhe festgelegt werden. Mit anderen Worten wird das Antriebsmittel relativ zu einem der Kletterschuhe des Selbstklettersystems festgelegt (blockiert), insbesondere sodass eine Bewegung des Antriebsmittels in seiner Längsrichtung relativ zu dem Kletterschuh verhindert wird. Relativ zu der Kletterschiene bleibt das Antriebsmittel auch in seinem relativ zum Kletterschuh festgelegten Zustand bewegbar. Wird nun das Antriebsmittel bewegt, das heißt entlang des Längenabschnitts der Kletterschiene verschoben, so kann dadurch die gesamte Kletterschiene bewegt werden. Je nach Richtung der Bewegung des Antriebsmittels entlang des Längenabschnitts kann die Kletterschiene somit entweder in eine oder in eine andere, insbesondere entgegengesetzte, Kletterrichtung klettern. Der Aktuator kann somit als Kletterantrieb wirken; insbesondere kann er das Antriebsmittel antreiben.

Der Aktuator kann somit mit der Kletterschiene mitklettern und muss nicht weitergetragen und/oder umgesetzt werden. Ein Rückwärtsklettern ist durch einfache Richtungsumkehr des Aktuators beziehungsweise durch Richtungsumkehr der Bewegung des Antriebsmittels möglich. Die Klettergeschwindigkeit kann gesteigert werden; insbesondere kann unterbrechungsfrei, kontinuierlich geklettert werden.

Durch Überwachung der Geschwindigkeit des Antriebsmittels, beispielsweise durch Drehzahlmessung an einem Antriebsrad, kann ein absoluter Gleichlauf auch mehrerer, insbesondere paralleler, Klettereinheiten, die vorzugsweise jeweils ein erfindungsgemäßes Selbstklettersystem umfassen, erreicht werden. Absturzstellen während des Kletterns werden vermieden. Zur Überwachung der Geschwindigkeit kann das Selbstklettersystem eine elektronische Kontrollvorrichtung umfassen, welche dazu eingerichtet ist, die Geschwindigkeit des Antriebsmittels zu regeln, insbesondere eine identische Geschwindigkeit der Antriebsmittel mehrerer Kletterschienen einzustellen.

Das umlaufende Antriebsmittel kann als Kette, bevorzugt Endloskette, Riemen oder Band ausgebildet sein. Eine Kette ist besonders robust und kann auch im verschmutzten Zustand sicher relativ zum Kletterschuh festgelegt werden. Eine Kette kann vorzugsweise als Gliederkette (Rundstahlkette) ausgebildet sein. Ein Riemen oder Band als Antriebsmittel ist vorzugsweise ebenfalls umlaufend geschlossen ausgebildet. Ein Riemen oder Band erlaubt eine besonders präzise Ausrichtung der Kletterschiene relativ zu dem Kletterschuh, da diese Antriebsmittel an einer beliebigen Stelle festgeklemmt werden können.

Denkbar ist auch, dass der Aktuator als elektrischer, hydraulischer und/oder pneumatischer und/oder selbsthemmender Kettenantrieb ausgebildet ist oder einen solchen aufweist. Ist beispielsweise der Aktuator als selbsthemmender Kettenantrieb ausgebildet, so kann vorgesehen sein, dass die Kette in eine vorgegebene Richtung bewegbar und entgegen dieser Richtung blockiert ist. So lässt sich ein Zurückrutschen der Kletterschiene, beispielsweise bei abgeschaltetem Kletterantrieb, vermeiden.

Mittels des Antriebsmittels kann das gesamte Selbstklettersystem bzw. die gesamte Klettereinheit verschoben werden, sodass je nach Größe und Gewicht des Klettersystems mit bedeutsamen Lasten bzw. großen, auf das Antriebsmittel einwirkenden Kräften zu rechnen ist, die durch einen elektrischen, hydraulischen und/oder pneumatischen Antrieb bereitgestellt werden können. Mit anderen Worten ist der Aktuator dazu ausgelegt, die auf das Selbstklettersystem entgegen einer Kletterrichtung wirkenden Kräfte zu überwinden.

Auch kann vorgesehen sein, dass die Kletterschiene wenigstens zwei Umlenkmittel zur Umlenkung des Antriebsmittels aufweist. Dadurch lässt sich eine reibungsarme Bewegung des Antriebsmittels erzielen. Die Umlenkmittel sind typischerweise beidenends des Längenabschnitts angeordnet. Die Umlenkmittel können beispielsweise Zahnräder, Kettenräder oder vorzugsweise Taschenräder umfassen, wenn das Antriebsmittel eine Kette ist. Für einen Riemen oder ein Band oder auch für eine Kette als Antriebsmittel können Umlenkrollen als Umlenkmittel vorgesehen sein.

Auch kann vorgesehen sein, dass die Kletterschiene ein Spannelement zur Einstellung der Spannung des Antriebsmittels aufweist oder ein solches Spannelement an der Kletterschiene angeordnet ist. Mittels des Spannelements kann das Antriebsmittel beispielsweise auf unterschiedliche Belastungssituationen und/oder Längen des Längenabschnittes eingestellt sein. Insbesondere kann der Kettenspanner selbsttätig spannend ausgebildet sein. Es kann beispielsweise vorgesehen sein, dass der Kettenspanner stets eine vorgegebene Kettenspannung und/oder Mindestkettenspannung sicherstellt.

Eine Kette als Antriebsmittel ist besonders bevorzugt als Gliederkette oder als Rollenkette ausgebildet. Dadurch kann die Kette besonders einfach blockiert und/oder entriegelt werden. Weiter weist eine solche Kette eine besonders hohe Reißfestigkeit auf. Ein Riemen ist vorzugsweise als Zahnriemen ausgebildet. Dadurch kann das Auftreten von Schlupf zwischen dem Aktuator und dem Riemen beim Antreiben vermieden werden. Zudem kann ein Zahnriemen eines als Riementrieb ausgebildeten Antriebsmittels besonders sicher relativ zu dem Kletterschuh blockiert werden.

An den Kletterschuhen kann eine Führung für das Antriebsmittel vorgesehen sein. Dadurch kann das Antriebsmittel besonders einfach und sicher in beziehungsweise zwischen die Kletterschuhe aufgenommen werden.

Die Führung kann als Führungsschlitz zur Durchführung des Antriebsmittels ausgebildet sein. Vorzugsweise ist der Führungsschlitz und/oder der Kletterschuh zur Entnahme des Antriebsmittels öffenbar. Der Führungsschlitz kann vorzugsweise zwischen wenigstens zwei, insbesondere voneinander abspreizbaren, Klauen ausgebildet sein. Somit lassen sich die Klauen öffnen und/oder schließen. Das Antriebsmittel kann somit noch einfacher in die Kletterschuhe eingeführt oder diesen entnommen werden.

Es kann vorgesehen sein, dass das Öffnen des Führungsschlitzes mittels einer Schlitzsperre gesperrt und/oder zumindest sperrbar ist, wenn sich der dem Führungsschlitz zugeordnete Kletterschuh in einem vordefinierten Kletterbereich relativ zum Antriebsmittel und/oder zur Kletterschiene befindet. Somit kann der Klettervorgang selbsttätig durchgeführt werden; insbesondere kann die Schlitzsperre derart gesteuert werden, dass die Kette und damit die Kletterschiene mit der Klettereinheit jeweils an den zum Klettern erforderlichen Punkten gehalten und/oder blockiert ist.

Denkbar ist auch, dass der Längenabschnitt der Kletterschiene mit dem Antriebsmittel von den Kletterschuhen umgriffen oder in den Kletterschuhen aufgenommen werden kann.

Denkbar ist auch, dass wenigstens ein Kletterschuh als Decken- und/oder als Wandkletterschuh ausgebildet ist. Somit kann der Kletterschuh beispielsweise jeweils an einer frisch gefertigten, insbesondere ausgehärteten, Decke und/oder Wand montiert werden.

Denkbar ist auch, dass die Fixiervorrichtung als wenigstens ein Fixierbolzen, eine Klaue oder eine Klinke ausgebildet ist und/oder dass die Fixiervorrichtung wenigstens einen Fixierbolzen, eine Klaue oder eine Klinke umfasst, wobei die Fixiervorrichtung ausgebildet ist, das Antriebsmittel im Bereich eines Kletterschuhs ortsfest zu blockieren oder freizugeben. Somit ergibt sich eine besonders einfache Möglichkeit, das Antriebsmittel zu blockieren oder freizugeben. Auch kann die Fixiervorrichtung dadurch auf einfache Weise so dimensioniert beziehungsweise gestaltet werden, dass diese selbst hohe Lasten beziehungsweise Kräfte dauerhaft aufnehmen kann.

Die Fixiervorrichtung kann manuell an dem ihr jeweils zugeordneten Kletterschuh betätigbar sein, sodass der Klettervorgang manuell gesteuert werden kann. Dazu kann beispielsweise der Fixierbolzen, passend zum jeweiligen Stadium des Kletterns, beispielsweise in die Fixiervorrichtung eingeschoben oder aus dieser herausgezogen werden. Auch ist denkbar, dass die Fixiervorrichtung automatisch, fernbedient, selbsttätig und/oder gesteuert betätigbar ist. Dies vereinfacht die Bedienung des Selbstklettersystems weiter.

Es kann vorgesehen sein, dass die Fixiervorrichtung eine Rastvorrichtung aufweist, mittels der das Antriebsmittel zumindest entlang der Kletterrichtung, insbesondere zur ortsfesten Festlegung des Antriebsmittels an der Rastvorrichtung, verrastbar ist. Die Rastvorrichtung kann insbesondere ein unbeabsichtigtes Rückwärtsklettern vermeiden. Allgemein kann mittels der Rastvorrichtung ein selbsttätiges Klettern ermöglicht werden.

Auch kann vorgesehen sein, dass das Selbstklettersystem wenigstens einen Zustandssensor zur Erfassung und/oder Überwachung der Hubkraft des Antriebsmittels, der Spannung des Antriebsmittels, der Position und/oder der Umlaufgeschwindigkeit des Antriebsmittels, der Position der Kletterschiene, insbesondere relativ zu wenigstens einem der Kletterschuhe und/oder relativ zum Antriebsmittel, des Drehmoments und/oder der Drehzahl eines Antriebsrades des Aktuators zum Antrieb des Antriebsmittels aufweist. Mittels des Zustandssensors kann somit der Klettervorgang überwacht werden. Eventuell auftretende Fehler können frühzeitig erkannt werden. Tritt ein Fehler beim Klettern auf, kann der Klettervorgang beispielsweise selbsttätig gestoppt oder zumindest unterbrochen werden. Auch kann ein Warnsignal ausgelöst werden. Die Überwachung kann dabei auf sehr einfache Weise erfolgen, da eine Vielzahl möglicher zu erfassender Parameter zur Verfügung steht. Auch kann - insbesondere während eines normalen Betriebs - die Position der Kletterschiene relativ zum Betonierabschnitt überwacht werden. So kann beispielsweise festgestellt werden, ob eine gewünschte Endposition bereits erreicht ist. In diesem Falle kann der Klettervorgang selbsttätig beendet werden. Der Zustandssensor kann als ein Geber ausgebildet sein, der eine Position des Antriebsmittels und/oder der Kletterschiene über die Anzahl der Drehungen eines Antriebsrades des Aktuators ermittelt.

Denkbar ist auch, dass das Selbstklettersystem eine weitere Kletterschiene mit einer weiteren, entlang der weiteren Kletterschiene umlaufenden, insbesondere endlos umlaufenden, Antriebsmittel umfasst, wobei das Selbstklettersystem eingerichtet ist, das Antriebsmittel und das weitere Antriebsmittel aufeinander abgestimmt, insbesondere synchron, zu bewegen. Dazu kann die weitere Kletterschiene analog zur schon bestehenden Kletterschiene gebildet sein. Somit wird es möglich, eine Klettereinheit an mehreren Kletterschienen zu montieren. Auch ist es möglich, weitere Bereiche beispielsweise eines zu erstellenden Gebäudes, mit dem Selbstklettersystem zu erfassen. Beispielsweise kann das gesamte Gebäude ringsherum mittels eines Selbstklettersystems mit mehreren Kletterschienen eingerüstet werden. Die Kletterschienen können aufeinander abgestimmt, insbesondere synchron, zueinander bewegt werden. Somit kann insbesondere das Entstehen von Absturzstellen während des Kletterns vermieden werden.

Das Selbstklettersystem kann beispielsweise eine Arbeitsbühne, eine Nachlaufbühne, eine Schutzeinhausung, ein Schalungssystem und/oder ein Schutzgitter umfassen.

Das Selbstklettersystem kann wenigstens eine Notfallsicherungseinheit aufweisen. Die Notfallsicherungseinheit kann beispielsweise als Rutschkupplung ausgebildet sein. Die Notfallsicherungseinheit kann insbesondere mittels eines selbsthemmenden Aktuators gebildet sein. Sie kann vorzugsweise an der Kletterschiene und/oder an wenigstens einem der Kletterschuhe angeordnet und/oder ausgebildet sein. Sie kann derart selbsttätig ausgebildet sein, dass durch sie eine Bewegung der Kletterschiene entgegen der gewünschten Kletterrichtung und/oder in Kletterrichtung, jedoch mit einer eine Grenzgeschwindigkeit überschreitenden Geschwindigkeit, verhindert, insbesondere blockiert, wird. Es kann insbesondere vorgesehen sein, dass die Notfallsicherungseinheit eine Bewegung blockiert, sofern das Antriebsmittel beschädigt, beispielsweise gerissen, ist.

Die Fixiervorrichtung kann an dem Kletterschuh entlang dem Längenabschnitt der Kletterschiene beweglich gelagert sein, vorzugsweise wobei die Fixiervorrichtung in eine Ausgangsstellung vorgespannt ist. Eine Anschlagmechanik kann die Beweglichkeit der Fixiervorrichtung in einer oder beiden Richtungen entlang dem Längenabschnitt einschränken. Besonders bevorzugt ist eine Sperrmechanik vorgesehen, die die Fixiervorrichtung starr an dem Kletterschuh festlegt, d. h. die Beweglichkeit der Fixiervorrichtung gegenüber dem Kletterschuh aufhebt, wenn die Fixiervorrichtung das Antriebsmittel an dem Kletterschuh blockiert. Dies ermöglicht einen besonders weichen, d. h. ruckarmen oder vorzugsweise ruckfreien, Übergang der Lastabtragung von einem ersten auf einen zweiten Kletterschuh des Selbstklettersystems, insbesondere wenn das Antriebsmittel eine Kette ist, die nur an diskreten Positionen (etwa durch Eingriff in eines der Kettenglieder) durch das Fixiermittel blockiert werden kann.

Alternativ oder zusätzlich kann das Selbstklettersystem eine Spannmechanik für das Antriebsmittel umfassen, welche dazu eingerichtet ist, das Antriebsmittel in einem Bereich zwischen einem ersten und einem zweiten Kletterschuh zu spannen. Die Spannmechanik kann beispielsweise einen, vorzugsweise hydraulischen, Hubzylinder umfassen, welcher einenends an der Lastschiene angelenkt ist und anderenends eine Haltemechanik zum Festhalten des Antriebsmittels aufweist. Dadurch kann die Last des Selbstklettersystems sanft von dem ersten auf den zweiten Kletterschuh übergeben werden, insbesondere wenn das Antriebsmittel eine Kette ist, die nur an diskreten Positionen (etwa durch Eingriff in eines der Kettenglieder) durch das Fixiermittel blockiert werden kann. Zunächst wird dazu das Antriebsmittel auch an dem zweiten Kletterschuh blockiert. Sodann spannt die Spannmechanik das Antriebsmittel zwischen dem zweiten Kletterschuh und ihrem Angriffspunkt an dem Antriebsmittel. Dieser Angriffspunkt liegt grundsätzlich zwischen den beiden Kletterschuhen. Dadurch wird die Last (z.B. Gewichtskraft) des Selbstklettersystems zunehmend auf den zweiten Kletterschuh übertragen. Ein Lastpfad verläuft durch die Spannmechanik. Dabei ist der Aktuator typischerweise deaktiviert, d. h. er bewegt das Antriebsmittel nicht. In einem Leertrum des Antriebsmittels zwischen dem Aktuator und dem zweiten Kletterschuh ist vorzugsweise ein passives Spannelement vorgesehen. Dadurch wird ein erforderlicher Spannweg für die Spannmechanik bereitgestellt. Wenn die Last auf den zweiten Kletterschuh übergeben ist, kann die Blockade des Antriebsmittels an dem ersten Kletterschuh aufgehoben werden. Sodann kann der Aktuator das Antriebsmittel zunehmend weiterbewegen, so dass dieses zwischen dem Angriffspunkt der Spannmechanik und dem Aktuator wieder unter Spannung gesetzt wird. Die Last des Selbstklettersystems geht dadurch wieder zunehmend von der Spannmechanik auf den Aktuator über. Wenn dieser die Last übernommen hat, kann die Spannmechanik von dem Antriebsmittel gelöst werden.

In den Rahmen der Erfindung fällt des Weiteren ein Verfahren zum Betrieb eines erfindungsgemäßen Selbstklettersystems, wobei für einen Klettervorgang das Antriebsmittel relativ zur Kletterschiene bewegt wird, während das Antriebsmittel zumindest abschnittsweise im Bereich eines Kletterschuhs und/oder in dem Kletterschuh blockiert ist. Somit sieht das erfindungsgemäße Verfahren vor, die Kletterschiene lediglich mittelbar am Kletterschuh entlang zu bewegen. Insbesondere ist vorgesehen, das Antriebsmittel relativ zur Kletterschiene zu bewegen, während es zumindest abschnittsweise im Bereich des Kletterschuhs und/oder in dem Kletterschuh blockiert ist. Ähnlich einem Kettenfahrzeug, das auf einem Boden eine Endloskette quasi abrollt, kann das Antriebsmittel des Klettersystems entlang einer beispielsweise zu erstellenden Gebäudewand abrollen. Während des - endlosen - Abrollens des Antriebsmittels an der Gebäudewand wird die Kletterschiene dem Kettenfahrzeug entsprechend automatisch mitgenommen. Somit kann die Kletterschiene ebenfalls, insbesondere mittelbar, entlang der Gebäudewand klettern. Die sich ergebende Kletterrichtung kann sich durch die Richtung der Bewegung der Kette relativ zur Kletterschiene bestimmen.

Verfahrensgemäß kann insbesondere vorgesehen sein, das Antriebsmittel in jeweils einem ersten Kletterschuh zu blockieren, bis die Kletterschiene mitsamt dem Antriebsmittel einen zweiten Kletterschuh erreicht und/oder in einer vorgegebenen Weise überklettert hat. Dann kann das Antriebsmittel an dem, entlang der Kletterrichtung weiter vorne gelegenen, zweiten Kletterschuh erneut festgelegt bzw. blockiert werden. Die Blockierung im ersten Kletterschuh kann dann gelöst werden.

Während dieses Wechsels der Kletterschuhe kann die Position der Kletterschiene fixiert sein. Dazu kann, beispielsweise mittels des Aktuators, das Antriebsmittel in seiner Relativposition zur Kletterschiene fixiert sein.

Anschließend kann der Klettervorgang fortgesetzt werden, indem das Antriebsmittel weiter bewegt wird.

Somit kann eine Strecke eines - insbesondere ausgehärteten - Betonierabschnitts überklettert werden. Als Betonierabschnitt kann insbesondere eine Gebäudewand vorgesehen sein.

Am Betonierabschnitt, insbesondere an der Gebäudewand, können, insbesondere über die gesamte zu kletternde Strecke hinweg, voneinander beabstandet angeordnete Kletterschuhe vorgesehen sein. Dann kann verfahrensgemäß die Kletterschiene im jeweils zu überkletternden Kletterschuh geführt werden.

Auch kann zusätzlich die Kletterschiene durch einen während des Kletterns erreichten jeweils nächsten Kletterschuh geführt werden.

Bei einer Variante des Verfahrens kann der Wechsel manuell erfolgen; insbesondere kann ein Fixierbolzen manuell von dem zu entriegelnden, ersten, Kletterschuh entfernt werden. Am zu blockierenden, zweiten Kletterschuh kann ein, insbesondere der, Fixierbolzen zur Blockierung eingeführt werden.

Bei einer anderen Variante des Verfahrens kann der Wechsel auch selbsttätig erfolgen. Insbesondere können die Kletterschuhe gebildet sein, die Blockierung selbsttätig, insbesondere durch Verrastung, oder durch eine Steuereinheit gesteuert, zu aktivieren oder zu lösen, d. h. entriegeln.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungsgemäße Einzelheiten zeigen, sowie aus den Ansprüchen.

Die vorgenannten und noch weiter ausgeführten Merkmale können je einzeln für sich oder zu mehreren in beliebigen Kombinationen bei Varianten der Erfindung verwirklicht sein, solange diese unter den Schutzumfang der Erfindung fallen, welche nur durch die beigefügten Ansprüche definiert wird.

In der schematischen Zeichnung sind Ausführungsbeispiele der Erfindung dargestellt, welche in der nachfolgenden Beschreibung näher erläutert werden.

### Es zeigen:

- Fig. 1: eine perspektivische Darstellung eines Selbstklettersystems;
- Fig. 2 und Fig. 3: eine Seitenansicht sowie eine Frontansicht des Selbstklettersystems der Fig. 1;
- Fig. 4: eine vergrößerte Detaildarstellung eines Ausschnitts des Selbstklettersystems der Fig. 1 von oben betrachtet;
- Fig. 5: eine vergrößerte Seitenansicht eines Ausschnitts des Selbstklettersystems der Fig. 1 mit einem Kletterschuh;
- Fig. 6, Fig. 7 und Fig. 8: Seitenansichten des Selbstklettersystems der Fig. 1 in verschiedenen Stadien eines Klettervorgangs; und
- Fig. 9a bis 14b: einen Klettterschuh eines erfindungsgemäßen Selbstklettersystems, wobei verschiedene Stadien des Einführens, Blockierens und Entriegelns einer Kletterschiene und eines Antriebsmittels dargestellt sind.

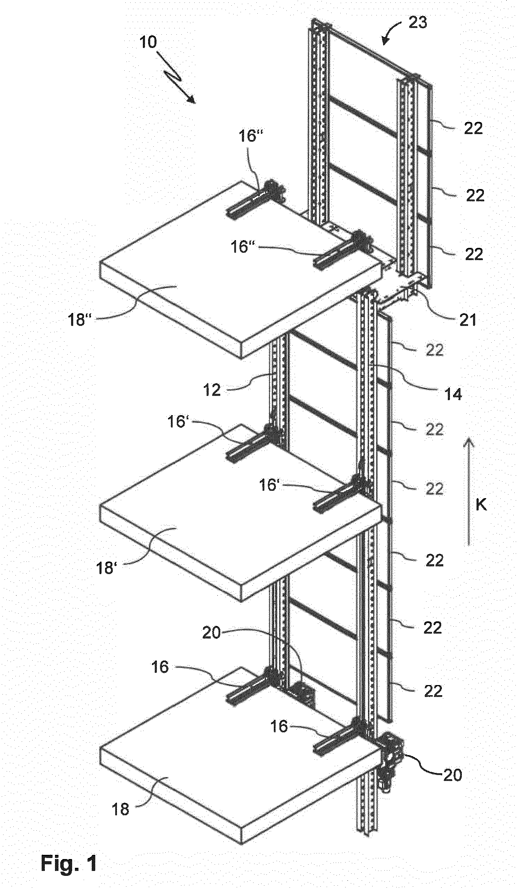

Zur Erleichterung des Verständnisses der Erfindung werden im Folgenden für gleiche oder sich entsprechende Elemente jeweils gleiche Bezugszeichen verwendet. Desgleichen wird zur Beschreibung des erfindungsgemäßen Verfahrens zur Bezeichnung von Elementen des für das Verfahren verwendeten Klettersystems auf die Bezugszeichen der Fig. 1 bis Fig. 5 zurückgegriffen.

**Fig. 1** zeigt ein Selbstklettersystem **10.** Das Selbstklettersystem 10 umfasst jeweils eine erste Kletterschiene **12** sowie eine zweite Kletterschiene **14.** Die Kletterschienen 12, 14 sind zueinander parallel angeordnet.

Weiter umfasst das Selbstklettersystem 10 mehrere, als Deckenschuhe ausgebildete Kletterschuhe **16, 16', 16",** von denen in Fig. 1 insgesamt sechs Kletterschuhe 16 abgebildet sind. Jeweils zwei der Kletterschuhe 16, 16', 16" sind an jeweils einem von drei in Fig.1 dargestellten, ausgehärteten Betonierabschnitten **18, 18', 18",** insbesondere paarweise auf einer Decke, befestigt. Allgemein ist jeder der Kletterschuhe 16, 16', 16" an einem Betonierabschnitt 18, 18', 18" befestigbar. Jeder Betonierabschnitt 18, 18', 18" stellt dabei einen Abschnitt einer jeweils - kurz zuvor erstellten - Geschossdecke eines zu erstellenden Gebäudes dar. Nicht dargestellt können die Kletterschuhe an der Außenfläche einer Wand als Wandkletterschuhe befestigt werden.

Jede der beiden Kletterschienen 12, 14 ist im in Fig. 1 dargestellten Stadium eines Klettervorgangs an jeweils zwei der Kletterschuhe 16, 16' geführt, insbesondere an jeweils einem, entlang einer hier beispielhaft vertikal nach oben führenden Kletterrichtung **K** betrachtet, oberen Kletterschuh 16' und einem unteren Kletterschuh 16. Im in Fig. 1 dargestellten Stadium entsprechen dabei die oberen Kletterschuhe 16' den an dem mittleren der drei Betonierabschnitte 18' befestigten Kletterschuhen 16'.

An jeder der Kletterschienen 12, 14 ist ferner ein Aktuator **20** angeordnet. Die Aktuatoren 20 sind als hydraulisch arbeitende Antriebe ausgebildet. Hydraulische Antriebe können aber auch durch elektrische und/oder pneumatische Antriebe ersetzt werden.

An den Kletterschienen 12, 14 sind mehrere Schutzabdeckungen **22,** beispielsweise zum Schutz vor Schmutz, zum Schutz vor herunterfallenden Teilen sowie als Absturzsicherung für Arbeitspersonen angeordnet.

Zu erkennen ist, dass die zuoberst angeordneten Schutzabdeckungen 22 mittelbar über eine Arbeitsbühne **21** an den ersten Kletterschienen 12 angeordnet sind. Zusammen bilden die Schutzabdeckungen 22 eine Schutzeinhausung **23.**

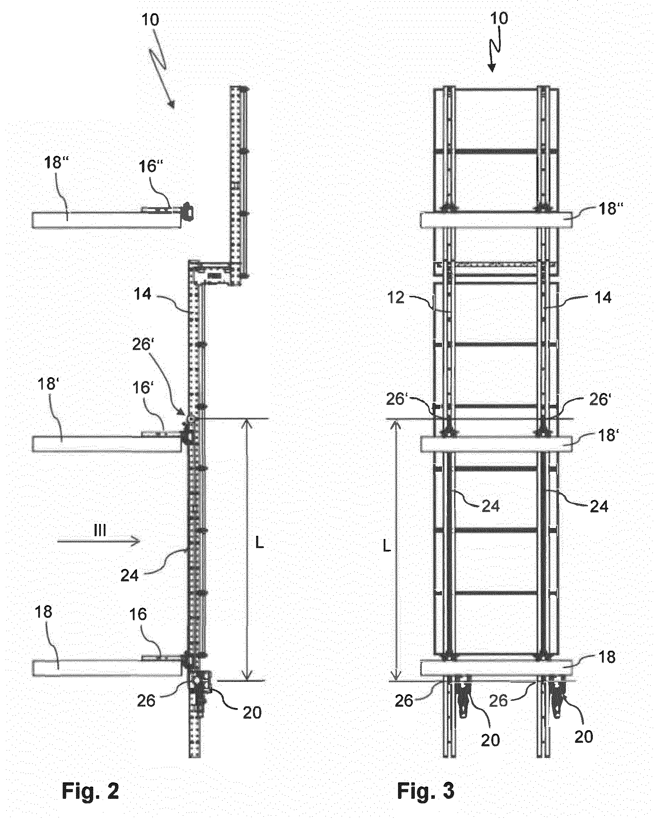

**Fig. 2** zeigt das Klettersystem 10 in einer Seitenansicht. Die Kletterschiene 12 aus Fig. 1 ist in der Seitenansicht der Fig. 2 verdeckt. Die Kletterschiene 14 reicht bis unterhalb des obersten der Betonierabschnitte 18" im in Fig. 2 und Fig. 1 dargestellten Kletterstadium. Dabei sind in diesem Kletterstadium auch an diesem obersten Betonierabschnitt 18" bereits Kletterschuhe 16" befestigt.

**Fig. 3** zeigt das Klettersystem 10 in einer Frontansicht mit Blick in Pfeilrichtung **III** aus Fig. 2. In der Zusammenschau mit Fig. 2 wird deutlich, dass die Aktuatoren 20 der Kletterschienen 12, 14 mit jeweils einem Antriebsmittel, hier einer Kette **24,** verbunden sind. In diesem Ausführungsbeispiel sind die Ketten 24 als Rollenketten ausgebildet.

Die Ketten 24 sind über einen Längenabschnitt L der Kletterschienen 12, 14 an diesen endlos umlaufend angeordnet. Dabei werden sie in ihren Umlaufendpunkten von Umlenkmitteln, hier Zahnrädern **26, 26',** umgelenkt.

Wenigstens eines der Zahnräder 26, 26' jeder Kletterschiene 12, 14, beispielsweise das des oberen Umlenkendpunktes (Zahnräder 26') ist in Längsrichtung von Längenabschnitten **L** gegen eine Federspannung verschieblich ausgebildet und bildet somit einen Kettenspanner zur Einstellung der Kettenspannung der Kette 24.

Die Zahnräder 26, 26' sind mittels der Aktuatoren 20 relativ zu den jeweiligen Kletterschienen 12, 14 bewegbar, insbesondere antreibbar. Je nach Ansteuerung der Aktuatoren 20 kann dabei die Umlaufrichtung der Ketten 24 um die Längenabschnitte L gewählt werden. Die Aktuatoren 20 werden aufeinander abgestimmt, insbesondere synchron, angesteuert und somit aufeinander abgestimmt betrieben. Dadurch sind die Ketten 24 jeweils aufeinander abgestimmt, insbesondere synchron, bewegbar.

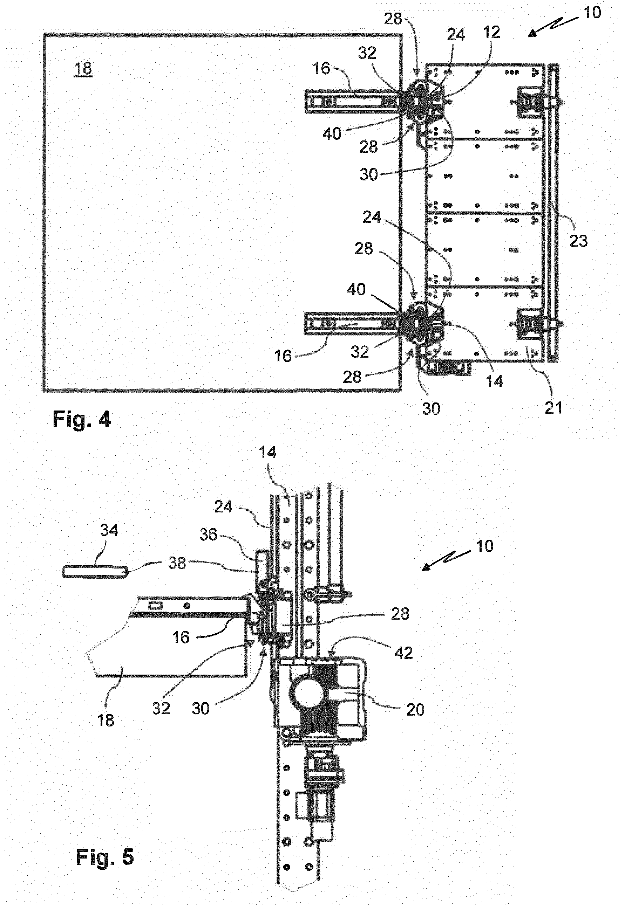

**Fig. 4** zeigt eine vergrößerte Detaildarstellung des Selbstklettersystems 10 von oben betrachtet. Die Betonierabschnitte 18', 18" und die an ihnen befestigten Kletterschuhe 16', 16" von Fig. 1, 2, 3 sind in Fig. 4 nicht dargestellt, so dass der Blick direkt von oben auf den Betonierabschnitt 18 (hier eine Geschossdecke) fällt. Zu erkennen sind insbesondere zwei an dem Betonierabschnitt 18 angeordnete Kletterschuhe 16. **Fig. 5** zeigt hierzu eine vergrößerte Seitenansicht eines Ausschnitts des Selbstklettersystems 10, insbesondere mit einem der beiden Kletterschuhe 16 der Fig. 4.

Zu erkennen ist, dass die Kletterschuhe 16 jeweils zwei, voneinander abspreizbare, in etwa halbkreisförmige Klauen **28** aufweisen, die zusammen jeweils einen öffenbaren Führungsschlitz **30** ausbilden. Die Führungsschlitze 30 dienen insbesondere zur Aufnahme jeweils einer der Ketten 24. Durch Abspreizen der Klauen 28 können die Führungsschlitze 30 geöffnet werden. Insbesondere können bei geöffnetem Führungsschlitz 30 die jeweilige Kette 24 und ein kletterschuhseitiger Teil der Kletterschiene 12, 14 eingeführt oder aus diesem entnommen werden. Solange keine Kette 24 und keine Kletterschiene 12, 14 eingeführt bzw. in den Kletterschuhen aufgenommen sind, sind die Klauen 28 abgespreizt und die Führungsschlitze 30 somit zur Aufnahme von Ketten 24 geöffnet.

Die Kletterschuhe 16 weisen ferner, insbesondere an den Klauen 28, jeweils eine selbsttätige Schlitzsperre **32** auf. Die Schlitzsperren 32 sind derart ausgebildet, dass das Öffnen des jeweiligen Führungsschlitzes 30 gesperrt ist, wenn sich der dem jeweiligen Führungsschlitz 30 zugeordnete Kletterschuh 16 in einem vordefinierten Kletterbereich relativ zur Kette 24 und/oder zur jeweiligen Kletterschiene 12, 14 befindet.

Ein schematisch dargestellter, frei beweglicher Fixierbolzen **34** bildet zusammen mit einer Bolzenaufnahme **36** eines jeden Kletterschuhs 16 eine Fixiervorrichtung **38** für das Antriebsmittel, d. h. hier für die Kette 24. Mittels der Fixiervorrichtung 38 kann die jeweilige Kette 24 wahlweise im jeweiligen Kletterschuh 16 blockiert oder entriegelt werden. Dazu genügt es, den Fixierbolzen 34 in und durch die Bolzenaufnahme 36 (aus Darstellungsgründen lediglich in Fig. 5 dargestellt) hindurch und soweit zu schieben, bis der Fixierbolzen 34 die Kette 24 zwischen zweien ihrer Glieder ortsfest blockiert. Die Kette 24 kann durch Entnahme des Fixierbolzens 34 entriegelt werden.

In diesem Ausführungsbeispiel ist der Fixierbolzen 34 frei beweglich und somit an dem ihm jeweils zugeordneten Kletterschuh 16 manuell betätigbar.

Bei einer alternativen Ausführungsform, die in Fig. 4 und Fig. 5 ebenfalls zumindest schematisch angedeutet ist, weist die Fixiervorrichtung 38 eine Rastvorrichtung **40,** insbesondere in einem Mittelbereich zwischen den Klauen 28, auf. Die Rastvorrichtung 40 ist als lediglich nach oben, d. h. in Kletterrichtung, klappbare, in ihrer Ruhelage horizontal ausgerichtete, Klappe mit einer Rückholfeder zur Rückstellung der Klappe in ihre Ruhelage ausgebildet. Somit wird eine zwischen den Klauen 28 angeordnete Kette 24 zumindest bei Bewegung der Kette entgegen - und somit bei Bewegung der Kletterschiene 12 bzw. 14 entlang - der Kletterrichtung selbsttätig blockiert und ortsfest an der Rastvorrichtung 40 festgelegt bzw. verrastet.

In den Aktuatoren 20 sind ferner Zustandssensoren **42** (Fig. 5) integriert. Die Zustandssensoren 42 sind dabei zur Erfassung und/oder Überwachung der Position der jeweiligen Kette 24, insbesondere relativ zu zur Kette, und somit zur Erfassung und Überwachung der Klettergeschwindigkeit ausgebildet.

Die erfasste Klettergeschwindigkeit kann beispielsweise durch eine Steuereinheit ausgewertet und zur Steuerung der Aktuatoren 20 genutzt werden.

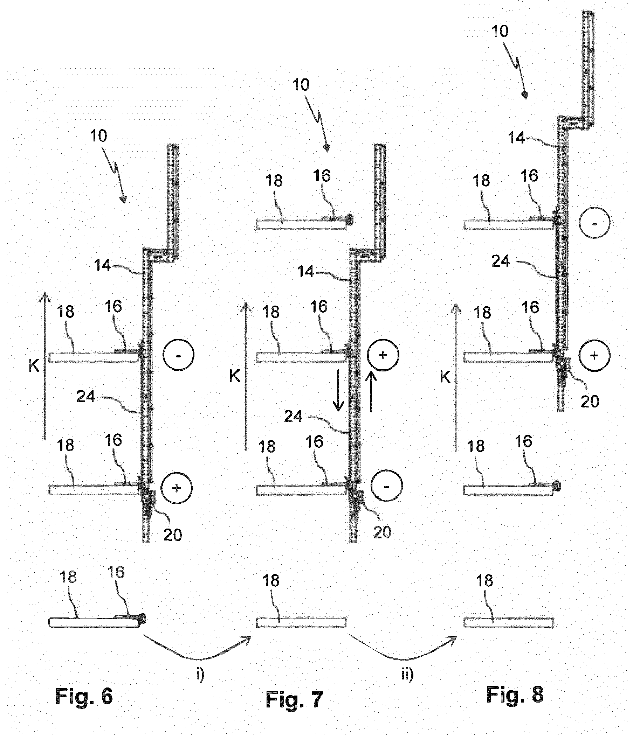

**Fig. 6, Fig. 7** und **Fig. 8** zeigen Seitenansichten des Selbstklettersystems 10 in verschiedenen Stadien eines Klettervorgangs. Anhand dieser Figuren wird im Folgenden das erfindungsgemäße Verfahren zum Betrieb eines erfindungsgemäßen Selbstklettersystems mit Bezug auf das Selbstklettersystem 10 näher erläutert.

Zu erkennen sind wiederum das Selbstklettersystem 10, mit dem über mehrere, voneinander vertikal beabstandete Betonierabschnitte 18 entlang der Kletterrichtung K, d. h. nach oben, hinweg geklettert werden soll. Währenddessen sollen, unterstützt durch das Selbstklettersystem 10, jeweils zuoberst neue Betonierabschnitte 18, d.h. Geschossdecken, erstellt werden.

Die Kletterschienen 14, in den Seitenansichten sind die Kletterschienen 12 verdeckt, des Selbstklettersystems 10 sind jeweils an mehreren Kletterschuhen 16 geführt. Die Kletterschuhe 16 sind wiederum an den jeweiligen Betonierabschnitten 18 befestigt.

Kletterschuhe 16, in denen oder in deren Bereich die jeweilige, in der jeweiligen Kettenschiene 12, 14 umlaufende Kette 24 mittels eines Fixierbolzens 34 (Fig. 5) blockiert ist, d. h. in denen die Fixiervorrichtungen 38 (Fig. 5) aktiviert sind, sind in Fig. 6 bis Fig. 8 mit einem "+" markiert. Kletterschuhe 16, in denen oder in deren Bereich die jeweilige, in der jeweiligen Kettenschiene 12, 14 umlaufende Kette 24 nicht mittels eines Fixierbolzens 34 (Fig. 5) blockiert ist, d. h. in denen die Fixiervorrichtungen 38 (Fig. 5) deaktiviert sind, sind in Fig. 6 bis Fig. 8 mit einem "-" markiert. Kletterschuhe 16, bei denen der Zustand der Fixiervorrichtungen 38 im jeweiligen Kletterstadium für den Klettervorgang unerheblich ist, sind nicht markiert.

Insbesondere sind somit die Kletterschienen 12, 14 in den mit "+" oder "-" markierten Kletterschuhen 16 jeweils geführt; insbesondere werden sie durch diese Kletterschuhe 16 gegen ein seitliches Wegkippen gehalten, können aber zumindest entlang der Kletterrichtung K verschoben werden.

In den mit "+" markierten Kletterschuhen 16 bzw. in deren Bereichen sind zusätzlich die jeweiligen Ketten 24 blockiert. Über diese Kletterschuhe 16 werden somit die Kletterschienen 12, 14 jeweils mittelbar über die Ketten 24 an den jeweiligen Betonierabschnitten 18 (bewegbar) abgestützt. Diese Kletterschuhe 16 nehmen somit über die jeweiligen Ketten 24 jeweils die Lasten der Kletterschienen 12, 14 auf.

In **Fig. 6** sind zunächst drei Betonierabschnitte 18 zu erkennen. Ein weiterer Betonierabschnitt 18 wird in diesem Kletterstadium oberhalb des bislang obersten Betonierabschnitts 18, beispielsweise unter Nutzung der Arbeitsbühne 21, erstellt. Dieser neue Betonierabschnitt 18 ist somit in Fig. 7 und Fig. 8 erkennbar.

Als Ausgangspunkt des Klettervorgangs stellt Fig. 6 ein Kletterstadium dar, bei dem die Ketten 24 in den untersten Kletterschuhen 16, in denen die Kletterschienen 12, 14 geführt sind, blockiert sind, d. h. deren Fixiervorrichtungen 38 aktiviert sind. Entlang der Kletterschienen 12, 14, jedoch oberhalb dieser Kletterschuhe 16 gelegene Fixiervorrichtungen 38 sind deaktiviert. Somit sind in Fig. 6 die Ketten 24 in den Bereichen der zweituntersten Betonierabschnitte 18 blockiert und in den Bereichen der drittuntersten Betonierabschnitte 18 gelöst.

Die Aktuatoren 20 sind zunächst deaktiviert, d. h. die jeweiligen Ketten 24 sind relativ zur jeweiligen Kletterschiene 12, 14 festgelegt.

In einem ersten Verfahrensschritt **i)** werden die Fixiervorrichtungen 38 der obersten Kletterschuhe 16 entlang der Kletterschienen 12, 14, somit die der drittuntersten Betonierabschnitte 18, aktiviert. Darunter, entlang der Kletterschienen 12, 14 gelegene, Fixiervorrichtungen 38 werden deaktiviert.

Für den weiteren Klettervorgang entlang der Kletterrichtung K nicht mehr benötigte Kletterschuhe 16 werden von den jeweiligen Betonierabschnitten 18 demontiert. Anschließend werden diese Kletterschuhe 16 an den neu erstellten, obersten - ausgehärteten - Betonierabschnitten 18 montiert.

Es ergibt sich somit das Kletterstadium gemäß **Fig. 7****.**

In einem nachfolgenden, zweiten Verfahrensschritt **ii)** werden nun die Aktuatoren 20 aktiviert. Hierdurch umlaufen die Ketten 24 ihre jeweiligen Kletterschienen 12, 14 bzw. die jeweiligen Längenabschnitte L (Fig. 2, Fig. 3) zumindest relativ zur jeweiligen Kletterschiene 12, 14. Für die gewünschte Kletterrichtung K, d. h. für ein Klettern nach oben, werden die Ketten 24 in der Darstellung gemäß Fig. 7 insbesondere entgegen dem Uhrzeigersinn relativ zur jeweiligen Kletterschiene 12, 14 mittels der Aktuatoren 20 bewegt (in Fig. 7 mit Richtungspfeilen markiert). Mit anderen Worten werden die Ketten 24 relativ zu den jeweiligen Kletterschienen 24 bewegt, während die Ketten 24 zumindest mit ihren gemäß Fig. 7 linksseitigen Abschnitten im Bereich der jeweiligen Kletterschuhe 16 und/oder in den Kletterschuhen 16 mit aktivierten Fixiervorrichtungen 38 (Fig. 5) blockiert sind.

Somit ziehen die in der Darstellung gemäß Fig. 7 linksseitigen Abschnitte der Ketten 24 die Kletterschienen 12, 14 entlang der Kletterrichtung K, d. h. nach oben.

Sobald die Aktuatoren 20 die unteren, deaktivierten Fixiervorrichtungen 38 bzw. die ihnen zugeordneten, unteren Kletterschuhe 16, erreichen, öffnen sich die an diesen Kletterschuhen 16 vorgesehenen Führungsschlitze 30 (Fig. 4, Fig. 5). Somit können die jeweiligen Ketten 24 und nachfolgend auch die Kletterschienen 12,14 diese unteren Kletterschuhe 16 verlassen. Eine Führung der Kletterschienen 12, 14 in den Kletterschuhen bleibt typischerweise zunächst erhalten, nachdem die Führungsschlitze 30 geöffnet wurden.

Die Kletterschienen 12, 14 erreichen die obersten, zuletzt montierten Kletterschuhe 16. Sie werden nunmehr in diesen obersten Kletterschuhen 16 zur weiteren Führung aufgenommen. Sobald auch die jeweiligen Ketten 24 diese obersten Kletterschuhe 16 erreichen, werden sie über die jeweiligen Führungsschlitze 30 ebenfalls aufgenommen. Diese Führungsschlitze 30 werden geschlossen. Die zugehörigen, nunmehr obersten Fixiervorrichtungen 38 werden gegebenenfalls deaktiviert oder bleiben deaktiviert, bis die Kletterschienen 12, 14 soweit geklettert sind, bis die Aktuatoren 20 die Kletterschuhe 16 mit aktivierten Fixiervorrichtungen 38 oder zumindest einen vordefinierten Bereich in der Nähe dieser Kletterschuhe 16 erreichen.

Es ergibt sich somit das in **Fig. 8** abgebildete Kletterstadium.

Zu erkennen ist, dass mittels der Verfahrensschritte i) und ii) die Kletterschienen 12, 14 insgesamt im Vergleich zum Anfangsstadium gemäß Fig. 6 um einen Betonierabschnitt 18 entlang der Kletterrichtung, d. h. nach oben, geklettert sind.

Der Klettervorgang kann anschließend, insbesondere nach Bedarf bzw. nach Belieben, durch zyklische Wiederholung der Verfahrensschritte i) und ii) fortgesetzt werden.

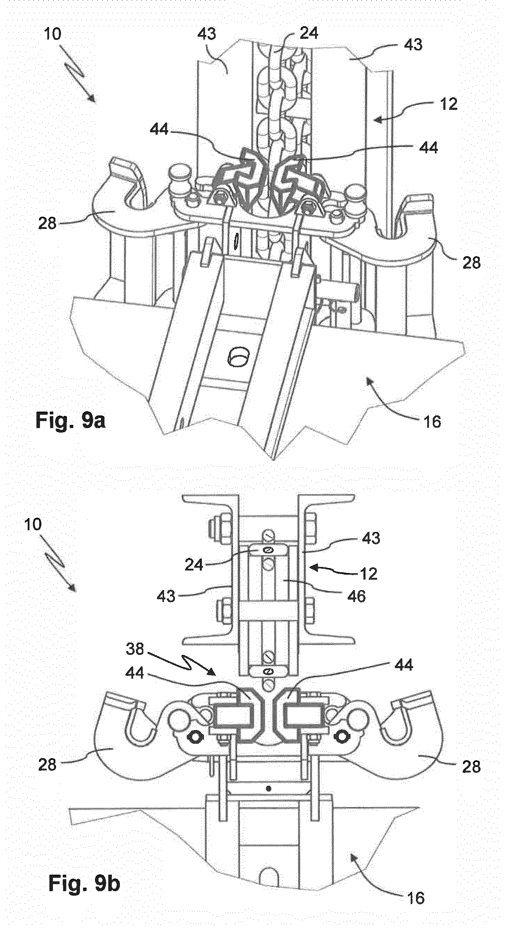

Die **Fig. 9a bis 14b** zeigen ein erfindungsgemäßes Selbsklettersystem 10 in verschiedenen Stadien des Einführens, Blockierens und Entriegelns einer Kletterschiene 12 und eines Antriebsmittels in Form einer Kette 24 in einen bzw. an einem Kletterschuh des Selbstklettersystems 10. In den Teilfiguren a ist jeweils eine perspektivische Ansicht von schräg oben gezeigt. Die Teilfiguren b sind jeweils Ansichten von oben mit Blickrichtung parallel zur Kletterschiene 12.

In **Fig. 9a** und **9b** ist die Kletterschiene 12 mit der Kette 24 von dem Kletterschuh 16 beabstandet angeordnet. Die Kletterschiene 12 umfasst hier zwei in einem Abstand zueinander starr verbundene U-Profile **43.**

Der Kletterschuh 16 umfasst ein Paar von Klauen 28, welche hier geöffnet sind. Die Klauen 28 sind jeweils um eine Drehachse, welche hier parallel zu der Kletterschiene 12 verläuft, verschwenkbar.

Der Kletterschuh 16 umfasst weiterhin eine Fixiervorrichtung 38 für das Antriebsmittel. Die Fixiervorrichtung 38 weist hier zwei Haltebacken **44** auf. Die Haltebacken 44 sind beweglich an dem Kletterschuh 16 gehalten, hier indem die Haltebacken 44 jeweils um eine auf die Kletterschiene 12 zu verlaufende Schwenkachse verschwenkbar sind. Die Haltebacken 44 können, hier durch Drehung um die jeweilige Schwenkachse, aufeinander zu und voneinander weg bewegt werden. Die Haltebacken 44 können in nicht näher dargestellter Weise aufeinander zu vorgespannt, etwa federbelastet, sein.

Das Antriebsmittel des Selbstklettersystems ist hier eine Kette 24 in Form einer Gliederkette (Rundstahlkette). In ihren Umlaufendpunkten ist die Kette 24 jeweils durch Umlenkmittel geführt. Das hier dargestellte untere Umlenkmittel ist als ein Taschenrad **46** ausgebildet. Typischerweise ist auch das obere, hier nicht dargestellte, Umlenkmittel als ein weiteres Taschenrad ausgebildet.

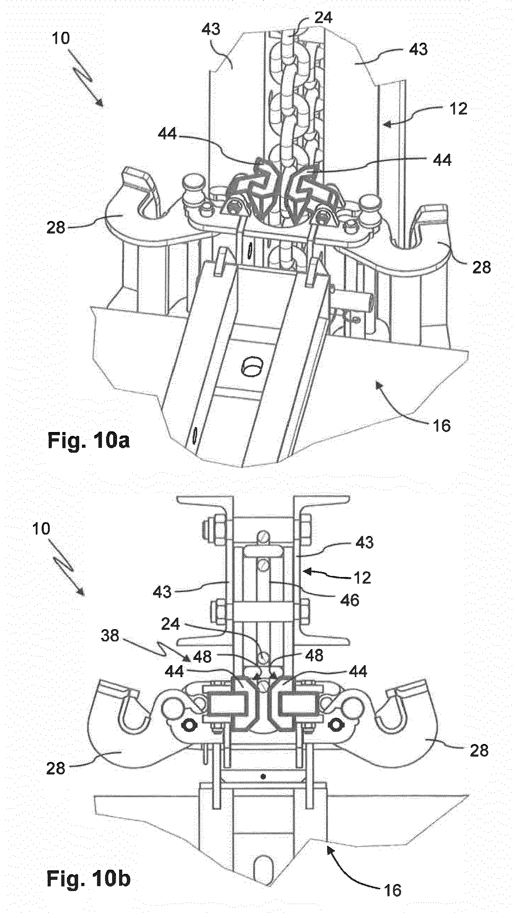

Im Zustand gemäß **Fig. 10a, 10b** ist die Kletterschiene 12 mit der Kette 24 weiter an den Kletterschuh 16 angenähert. Die Kette 24 liegt nun an ersten Schrägflächen **48** der Haltebacken 44 des Kletterschuhs 16 an.

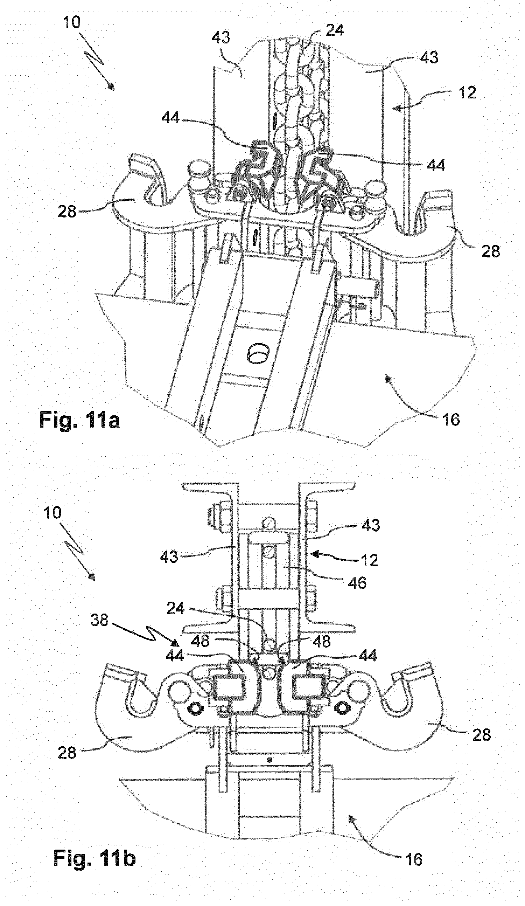

In der Konfiguration von **Fig. 11a, 11b** ist die Kletterschiene 12 mit der Kette 24 noch weiter in Richtung zu dem Kletterschuh 16 hin vorgeschoben. Die Kette 24 spreizt die Haltebacken 44 über deren erste Schrägflächen 48 auseinander.

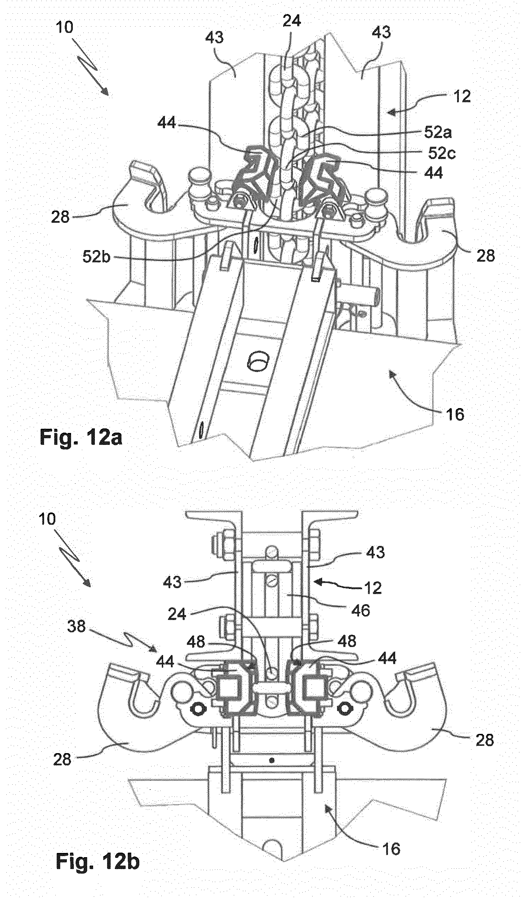

In **Fig. 12a, 12b** ist ein Zustand dargestellt, nachdem die Kletterschiene 12 mit der Kette 24 weit genug für ein Schließen der Klauen 28 des Kletterschuhs 16 vorgeschoben wurde, d. h. an den Kletterschuh 16 angenähert wurde. Ein kletterschuhseitiger Abschnitt der Kette 24 befindet sich nun mittig zwischen den Haltebacken 44. Die Haltebacken 44 sind im dargestellten Zustand noch geöffnet und greifen nicht in die Kette 24 ein. Die Kette 24 ist in dieser Konfiguration nicht an dem Kletterschuh 16 blockiert.

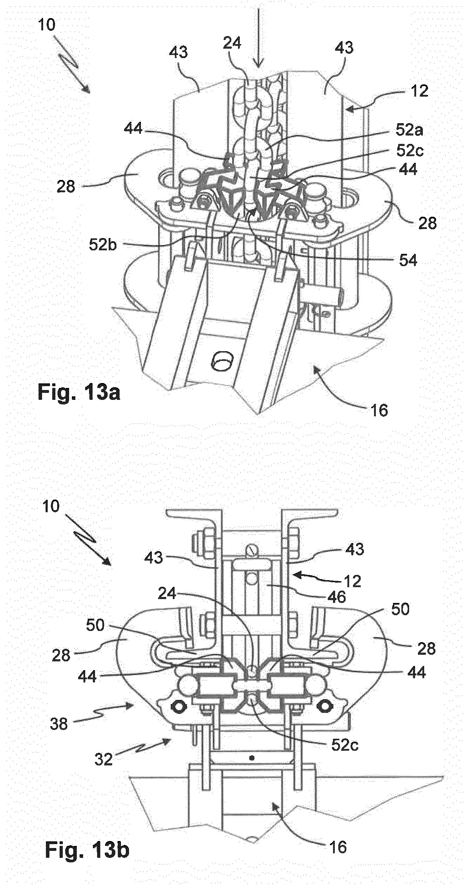

In **Fig. 13a, 13b** ist das Selbstklettersystem 10 gezeigt, nachdem die Klauen 28 geschlossen und die Kette 24 an dem Kletterschuh 16 blockiert wurde. Die Klauen 28 wurden gegenüber dem Zustand gemäß Fig. 12a, 12b um ihre jeweilige Drehachse verschwenkt. Die Klauen 28 umgreifen nun jeweils einen Flansch **50** eines U-Profils 43 der Kletterschiene 12. Die Kletterschiene 12 kann somit nicht von dem Kletterschuh 16 entfernt werden; sie ist mit anderen Worten an dem Kletterschuh 16 fixiert. Eine nicht im Detail dargestellte Schlitzsperre 32 verhindert ein Öffnen der Klauen 28.

Die Haltebacken 44 greifen zwischen zwei näherungsweise parallel zu den Flanschen 50 der U-Profile 43 der Kletterschiene 12 ausgerichtete Kettenglieder **52a, 52b** der Kette 24 ein. Die Haltebacken 44 liegen dabei an einem quer zu den Flanschen orientierten Kettenglied **52c** zwischen den beiden Kettengleidern 52a, 52b an. Um das Eingreifen der Haltebacken 44 in die Kette 24 zu ermöglichen, wurde die Kette 24 gegenüber der Konfiguration gemäß Fig. 12a, 12b im Bereich des Kletterschuhs 16 in Richtung des in Fig. 13a eingezeichneten Pfeils nach unten bewegt. Dadurch wurde erreicht, dass die Haltebacken 44 unterstützt durch ihre Vorspannung aufeinander zu zwischen den Kettengliedern 52a, 52c aufgenommen wurden. Ein weiteres Bewegen der Kette 24 in Pfeilrichtung relativ zu dem Kletterschuh 16 wird dadurch verhindert, dass das Kettenglied 52a oberseitig auf den Haltebacken 44 aufliegt. Eine Krafteinleitung von oben auf die Haltebacken 44 durch die Kette 24 führt wegen der Lage der Schwenkachse der Haltebacken 44 zu einem weiteren Drücken der Haltebacken 44 aufeinander zu. Dies wird durch das zwischen den Haltebacken 44 eingeklemmte Kettenglied 52c verhindert. Die Blockierwirkung der Fixiervorrichtung beruht auf dem Formschluss zwischen den Haltebacken 44 und dem oben auf diesen aufliegenden Kettenglied 52a. Die Fixiervorrichtung 38 ist in Bezug auf eine Bewegung der Kette 24 in Pfeilrichtung relativ zu dem Kletterschuh 16 selbsthemmend.

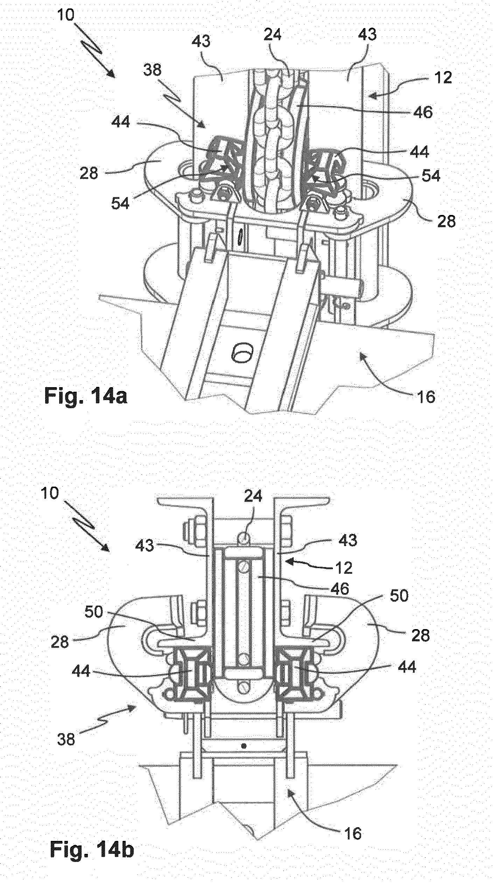

Bei der in **Fig. 14a, 14b** gezeigten Konfiguration des Selbstklettersystems 10 ist die Lastschiene 12 gegenüber der Konfiguration von Fig. 13a, 13b weitergeklettert, d.h. gegenüber dem Kletterschuh 16 aus der Zeichenebene der Fig. 13b, 14b heraus auf den Betrachter zu bewegt worden. Die Klauen 28 des Kletterschuhs 16 umgreifen auch in der Konfiguration von Fig. 14a, 14b die Kletterschiene 12.

Die Fixiervorrichtung 38 ist nun entriegelt. Die Haltebacken 44 greifen nicht mehr in die Kette 24 ein. Um die Fixiervorrichtung 38 zu entriegeln, wurden die Haltebacken 44 von dem Taschenrad 46 nach außen gedrückt. Beim Klettern der Kletterschiene 12 zwischen den Konfigurationen von Fig. 13a, 13b und Fig. 14a, 14b ist das Taschenrad 46 auf dem Kettentrum unterhalb des Kletterschuhs 16 der fixierten Kette 24 abgerollt, bis das Taschenrad 46 den Kletterschuh 16 erreicht hat. Beim Weiterklettern hat das Taschenrad 46 die Haltebacken 44 über unterseitig an den Haltebacken 44 ausgebildete zweite Schrägflächen **54** nach außen gedrückt. Dadurch sind die Haltebacken 44 außer Eingriff mit der Kette 24 gelangt. Man beachte, dass die Haltebacken in Fig. 14a, 14b gegenüber Fig. 13a, 13b um ca. 90° nach außen geschwenkt sind. Das Taschenrad 46 befindet sich nunmehr zwischen den Haltebacken 44 der Fixiervorrichtung 38. Beim Weiterklettern wird die Lastschiene einstweilen noch von den Klauen 28 an dem Kletterschuh 16 geführt. Die Kette 24 ist zum Klettern an einem weiteren, in Kletterrichtung weiter vorne liegenden Kletterschuh (nicht dargestellt) mittels dessen Fixiervorrichtung blockiert.

## Patentansprüche

1. Selbstklettersystem (10), insbesondere Selbstkletterschalungssystem, umfassend wenigstens eine an wenigstens zwei Kletterschuhen (16, 16', 16"), insbesondere einem oberen und einem unteren Kletterschuh, geführte Kletterschiene (12, 14), wobei die Kletterschuhe (16, 16', 16") an und/oder auf einem ausgehärteten Betonierabschnitt (18, 18', 18") befestigbar sind, und einen an der Kletterschiene (12, 14) angeordneten Aktuator (20), wobei entlang der Kletterschiene (12, 14) zumindest über einen Längenabschnitt (L) der Kletterschiene (12, 14) ein umlaufendes Antriebsmittel angeordnet ist, das mittels des Aktuators (20) relativ zur Kletterschiene (12, 14) bewegbar und mittels wenigstens einer Fixiervorrichtung (38) des Selbstklettersystems für das Antriebsmittel wahlweise im Bereich eines Kletterschuhs (16, 16', 16") und/oder in dem Kletterschuh (16, 16', 16") blockierbar oder entriegelbar ist, wobei, wenn das Antriebsmittel relativ zu einem der Kletterschuhe (16, 16', 16") des Selbstklettersystems (10) festgelegt ist, eine Bewegung des Antriebsmittels in seiner Längsrichtung relativ zu dem Kletterschuh (16, 16', 16") verhindert ist und relativ zu der Kletterschiene (12, 14) das Antriebsmittel in seinem relativ zum Kletterschuh (16, 16', 16") festgelegten Zustand bewegbar bleibt.

2. Selbstklettersystem nach Anspruch 1, **dadurch gekennzeichnet, dass** das umlaufende Antriebsmittel als Kette (24), bevorzugt Endloskette, Riemen oder Band ausgebildet ist.

3. Selbstklettersystem nach Anspruch 1 oder 2, **dadurch gekennzeichnet, dass** der Aktuator (20) als elektrischer, hydraulischer und/oder pneumatischer und/oder selbsthemmender Antrieb ausgebildet ist oder einen solchen aufweist.

4. Selbstklettersystem nach einem der vorhergehenden Ansprüche, **dadurch gekennzeichnet, dass** die Kletterschiene (12, 14) wenigstens zwei Umlenkmittel zur Umlenkung des Antriebsmittels aufweist.

5. Selbstklettersystem nach einem der Ansprüche 2 bis 4, **dadurch gekennzeichnet, dass** die Kette (24) als Gliederkette oder als Rollenkette ausgebildet ist, oder dass der Riemen als Zahnriemen ausgebildet ist.

6. Selbstklettersystem nach einem der vorhergehenden Ansprüche, **dadurch gekennzeichnet, dass** an den Kletterschuhen (16, 16', 16") eine Führung für das Antriebsmittel vorgesehen ist.

7. Selbstklettersystem nach Anspruch 6, **dadurch gekennzeichnet, dass** die Führung als Führungsschlitz (30) zur Durchführung des Antriebsmittels ausgebildet ist und der Führungsschlitz (30) und/oder der Kletterschuh (16, 16', 16") zur Entnahme des Antriebsmittels öffenbar ist, wobei der Führungsschlitz (30) vorzugsweise zwischen wenigstens zwei, insbesondere voneinander abspreizbaren, Klauen (28) ausgebildet ist.

8. Selbstklettersystem nach Anspruch 7, **dadurch gekennzeichnet, dass** das Öffnen des Führungsschlitzes (30) mittels einer Schlitzsperre (32) gesperrt und/oder zumindest sperrbar ist, wenn sich der dem Führungsschlitz (30) zugeordnete Kletterschuh (16, 16', 16") in einem vordefinierten Kletterbereich relativ zum Antriebsmittel und/oder zur Kletterschiene (12, 14) befindet.

9. Selbstklettersystem nach einem der vorhergehenden Ansprüche, **dadurch gekennzeichnet, dass** der Längenabschnitt (L) der Kletterschiene (12, 14) mit dem Antriebsmittel von den Kletterschuhen (16, 16', 16") umgriffen oder in den Kletterschuhen (16, 16', 16") aufgenommen werden kann .

10. Selbstklettersystem nach einem der vorhergehenden Ansprüche, **dadurch gekennzeichnet, dass** die Fixiervorrichtung (38) als wenigstens ein Fixierbolzen (34), eine Klaue oder eine Klinke ausgebildet ist und/oder dass die Fixiervorrichtung (38) wenigstens einen Fixierbolzen (34), eine Klaue oder eine Klinke umfasst, wobei die Fixiervorrichtung (38) ausgebildet ist, das Antriebsmittel im Bereich eines Kletterschuhs (16, 16', 16") ortsfest zu blockieren oder freizugeben.

11. Selbstklettersystem nach Anspruch 10, **dadurch gekennzeichnet, dass** die Fixiervorrichtung (38) manuell, automatisch, fernbedient, selbsttätig und/oder gesteuert an dem ihr jeweils zugeordneten Kletterschuh (16, 16', 16") betätigbar ist.

12. Selbstklettersystem nach einem der vorhergehenden Ansprüche, **dadurch gekennzeichnet, dass** die Fixiervorrichtung (38) eine Rastvorrichtung (40) aufweist, mittels der das Antriebsmittel zumindest entlang der Kletterrichtung (K), insbesondere zur ortsfesten Festlegung des Antriebsmittels an der Rastvorrichtung (40), verrastbar ist.

13. Selbstklettersystem nach einem der vorhergehenden Ansprüche, **dadurch gekennzeichnet, dass** das Selbstklettersystem (10) wenigstens einen Zustandssensor (42) zur Erfassung und/oder Überwachung der Hubkraft des Antriebsmittels, der Spannung des Antriebsmittels, der Position und/oder der Umlaufgeschwindigkeit des Antriebsmittels, der Position der Kletterschiene (12, 14), insbesondere relativ zu wenigstens einem der Kletterschuhe (16, 16', 16") und/oder relativ zum Antriebsmittel, des Drehmoments und/oder der Drehzahl eines Antriebsrades des Aktuators (20) zum Antrieb des Antriebsmittels aufweist.

14. Selbstklettersystem nach einem der vorhergehenden Ansprüche, **dadurch gekennzeichnet, dass** das Selbstklettersystem (10) eine weitere Kletterschiene (12, 14) mit einem weiteren, entlang der weiteren Kletterschiene (12, 14) umlaufenden Antriebsmittel umfasst, wobei das Selbstklettersystem eingerichtet ist, das Antriebsmittel und das weitere Antriebsmittel aufeinander abgestimmt, insbesondere synchron, zu bewegen.

15. Selbstklettersystem nach einem der vorhergehenden Ansprüche, **dadurch gekennzeichnet, dass** das Selbstklettersystem (10) eine Arbeitsbühne (21), eine Nachlaufbühne, eine Schutzeinhausung (23), ein Schalungssystem und/oder ein Schutzgitter aufweist.

16. Verfahren zum Betrieb eines Selbstklettersystems (10) nach einem der vorhergehenden Ansprüche, wobei für einen Klettervorgang das Antriebsmittel relativ zur Kletterschiene (12, 14) bewegt wird, während das Antriebsmittel zumindest abschnittsweise im Bereich eines Kletterschuhs (16, 16', 16") und/oder in dem Kletterschuh (16, 16', 16") blockiert ist.

## Claims

1. Self-climbing system (10), in particular a self-climbing formwork system, comprising at least one climbing rail (12, 14) guided on at least two climbing shoes (16, 16', 16"), in particular an upper and a lower climbing shoe, wherein the climbing shoes (16, 16', 16") are attachable to and/or on a hardened concreting section (18, 18', 18"), and an actuator (20) arranged on the climbing rail (12, 14), wherein a circumferential drive means is arranged along the climbing rail (12, 14), at least over a length section (L) of the climbing rail (12, 14), which drive means is movable with respect to the climbing rail (12, 14) by means of the actuator (20) and can be optionally blocked or unblocked with respect to the climbing rail (12, 14) in the domain of a climbing shoe (16, 16', 16") and/or in the climbing shoe (16, 16', 16") by means of at least one fixing device (38) of the self-climbing system for the drive means, wherein, when the drive means is fixed relative to one of the climbing shoes (16, 16', 16") of the self-climbing system (10), a movement of the drive means in its longitudinal direction relative to the climbing shoe (16, 16', 16") is prevented and the drive means remains movable with respect to the climbing rail (12, 14) while it is in its fixed condition relative to the climbing shoe (16, 16', 16").

2. Self-climbing system according to claim 1, **characterized in that** the circumferential drive means is a chain (24), preferably a continuous chain, belt or ribbon.

3. Self-climbing system according to claims 1 or 2, **characterized in that** the actuator (20) is an electric, hydraulic and/or pneumatic and/or self-locking drive or features such a drive.

4. Self-climbing system according to one of the foregoing claims, **characterized in that** the climbing chain (12, 14) has at least two means of redirection for redirecting the drive means.

5. Self-climbing system according to one of the claims 2 to 4, **characterized in that** the chain (24) is a link chain or a roller chain or that the belt is a toothed belt.

6. Self-climbing system according to one of the foregoing claims, **characterized in that** a guide for the drive means is provided at the climbing shoes (16, 16', 16").

7. Self-climbing system according to claim 6, characterized that the guide is configured as a guide slot (30) for passing the drive means through the slot and the guide slot (30) and/or the climbing shoe (16, 16', 16") can be opened for withdrawing the drive means, wherein the guide slot (30) preferably is located between at least two claws (28) that in particular can be strutted apart.

8. Self-climbing system according to claim 7, **characterized in that** opening of the guide slot (30) by means of a slot barrier (32) is blocked and/or at least can be blocked if the climbing shoe (16, 16', 16') associated with the guide slot (30) is located in a pre-defined climbing range with respect to the drive means and/or the climbing rail (12, 14).

9. Self-climbing system according to one of the preceding claims, **characterized in that** the lengthwise section (L) of the climbing rail (12, 14) with the drive means can be clasped by the climbing shoes (16, 16', 16") or taken up in the climbing shoes (16, 16', 16").

10. Self-climbing system according to one of the preceding claims, **characterized in that** the fixing device (38) is at least one fixing pin (34), a claw or a latch and/or that the fixing device (38) comprises at least one fixing pin (34), a claw or a latch, wherein the fixing device (38) is configured to stationarily block or release the drive means in the region of a climbing shoe (16, 16', 16').

11. Self-climbing system according to claim 10, **characterized in that** the fixing device (38) can be operated manually, automatically, by remote control, or independently and/or in a controlled manner at the climbing shoe (16, 16', 16") respectively associated therewith.

12. Self-climbing system according to one of the preceding claims, **characterized in that** the fixing device (38) has a snap-in locking device (40) by means of which the drive means can be locked at least along the climbing direction (K), in particular for stationarily fixing the drive means to the snap-in locking device (40).

13. Self-climbing system according to one of the preceding claims, **characterized in that** the self-climbing system (10) has at least one status sensor (42) for recording and/or monitoring the lifting power of the drive means, the tension of the drive means, the position and/or the circumferential speed of the drive means, the position of the climbing rail (12, 14), in particular with respect to at least one of the climbing shoes (16, 16', 16") and/or with respect to the drive means, the torque and/or the rotation speed of a drive wheel of the actuator (20) for running the drive means.

14. Self-climbing system according to one of the preceding claims, **characterized in that** the self-climbing system (10) comprises an additional climbing rail (12, 14) with an additional drive means being circumferential along the additional climbing rail (12, 14), wherein the self-climbing system is designed to move the drive means and the additional drive means in a coordinated manner, in particular synchronously.

15. Self-climbing system according to one of the preceding claims, **characterized in that** the self-climbing system (10) has a work platform (21), a finishing platform, a protective housing (23), a formwork system and/or a protective grille.

16. Method for operating a self-climbing system (10) according to one of the preceding claims, wherein the drive means is moved with respect to the climbing rail (12, 14) for a climbing process, while the drive means, at least in sections, is blocked in the region of a climbing shoe (16, 16', 16") and/or in the climbing shoe (16, 16', 16").

## Revendications

1. Système auto-grimpant (10), en particulier système de coffrage auto-grimpant, comprenant
au moins un rail de montée (12, 14) guidé sur au moins deux sabots de montée (16, 16', 16"), en particulier un sabot de montée supérieur et un sabot de montée inférieur, les sabots de montée (16, 16', 16") pouvant être fixés à et/ou sur une section de bétonnage durcie (18, 18', 18"),
et un actionneur (20) disposé sur le rail de montée (12, 14),
dans lequel un moyen d'entraînement circulant est disposé le long du rail de montée (12, 14) au moins sur une section de longueur (L) du rail de montée (12, 14), lequel peut être déplacé par rapport au rail de montée (12, 14) au moyen de l'actionneur (20) et être bloqué ou déverrouillé au moyen d'au moins un dispositif de fixation (38) du système auto-grimpant pour le moyen d'entraînement au choix dans la zone d'un sabot de montée (16, 16', 16") et/ou dans le sabot de montée (16, 16', 16"), dans lequel, lorsque le moyen d'entraînement est immobilisé par rapport à l'un des sabots de montée (16, 16', 16") du système auto-grimpant (10), un mouvement du moyen d'entraînement dans sa direction longitudinale par rapport au sabot de montée (16, 16', 16") est empêché et le moyen d'entraînement reste mobile par rapport au rail de montée (12, 14) dans son état immobilisé par rapport au sabot de montée (16, 16', 16").

2. Système auto-grimpant selon la revendication 1, **caractérisé en ce que** le moyen d'entraînement circulant est réalisé sous la forme d'une chaîne (24), de préférence une chaîne sans fin, d'une courroie ou d'une bande.

3. Système auto-grimpant selon la revendication 1 ou 2, **caractérisé en ce que** l'actionneur (20) est réalisé sous la forme d'un entraînement électrique, hydraulique et/ou pneumatique et/ou autobloquant ou présente un tel entraînement.

4. Système auto-grimpant selon l'une des revendications précédentes, **caractérisé en ce que** le rail de montée (12, 14) présente au moins deux moyens de renvoi pour le renvoi du moyen d'entraînement.

5. Système auto-grimpant selon l'une des revendications 2 à 4, **caractérisé en ce que** la chaîne (24) est réalisée sous la forme d'une chaîne à maillons ou d'une chaîne à rouleaux, ou que la courroie est réalisée sous la forme d'une courroie crantée.

6. Système auto-grimpant selon l'une des revendications précédentes, **caractérisé en ce qu'**un guide pour le moyen d'entraînement est prévu sur les sabots de montée (16, 16', 16").

7. Système auto-grimpant selon la revendication 6, **caractérisé en ce que** le guide est réalisé sous la forme d'une fente de guidage (30) pour le passage du moyen d'entraînement et que la fente de guidage (30) et/ou le sabot de montée (16, 16', 16") peut être ouvert pour retirer le moyen d'entraînement, la fente de guidage (30) étant de préférence réalisée entre au moins deux griffes (28) pouvant, en particulier, être écartées l'une de l'autre.

8. Système auto-grimpant selon la revendication 7, **caractérisé en ce que** l'ouverture de la fente de guidage (30) est bloquée et/ou au moins blocable au moyen d'un blocage de fente (32) lorsque le sabot de montée (16, 16', 16") associé à la fente de guidage (30) se trouve dans une zone de montée prédéfinie par rapport au moyen d'entraînement et/ou au rail de montée (12, 14).

9. Système auto-grimpant selon l'une des revendications précédentes, **caractérisé en ce que** la section de longueur (L) du rail de montée (12, 14) avec le moyen d'entraînement peut être entourée par les sabots de montée (16, 16', 16") ou reçue dans les sabots de montée (16, 16', 16").

10. Système auto-grimpant selon l'une des revendications précédentes, **caractérisé en ce que** le dispositif de fixation (38) est réalisé sous la forme d'au moins un boulon de fixation (34), d'une griffe ou d'un cliquet et/ou que le dispositif de fixation (38) comprend au moins un boulon de fixation (34), une griffe ou un cliquet, le dispositif de fixation (38) étant conçu pour bloquer en position fixe ou libérer le moyen d'entraînement dans la zone d'un sabot de montée (16, 16', 16").

11. Système auto-grimpant selon la revendication 10, **caractérisé en ce que** le dispositif de fixation (38) peut être actionné manuellement, automatiquement, à distance, de manière autonome et/ou commandée sur le sabot de montée (16, 16', 16") qui lui est respectivement associé.

12. Système auto-grimpant selon l'une des revendications précédentes, **caractérisé en ce que** le dispositif de fixation (38) présente un dispositif d'encliquetage (40) au moyen duquel le moyen d'entraînement peut être encliqueté au moins le long de la direction de montée (K), en particulier pour immobiliser en position fixe le moyen d'entraînement sur le dispositif d'encliquetage (40).

13. Système auto-grimpant selon l'une des revendications précédentes, **caractérisé en ce que** le système auto-grimpant (10) présente au moins un capteur d'état (42) pour détecter et/ou surveiller la force de levage du moyen d'entraînement, la tension du moyen d'entraînement, la position et/ou la vitesse de circulation du moyen d'entraînement, la position du rail de montée (12, 14), en particulier par rapport à au moins l'un des sabots de montée (16, 16', 16") et/ou par rapport au moyen d'entraînement, le couple et/ou la vitesse de rotation d'une roue motrice de l'actionneur (20) pour entraîner le moyen d'entraînement.

14. Système auto-grimpant selon l'une des revendications précédentes, **caractérisé en ce que** le système auto-grimpant (10) comprend un autre rail de montée (12, 14) avec un autre moyen d'entraînement circulant le long de l'autre rail de montée (12, 14), le système auto-grimpant étant conçu pour déplacer le moyen d'entraînement et l'autre moyen d'entraînement de manière coordonnée, en particulier de manière synchrone.

15. Système auto-grimpant selon l'une des revendications précédentes, **caractérisé en ce que** le système auto-grimpant (10) présente une plate-forme de travail (21), une plate-forme suiveuse, une enceinte de protection (23), un système de coffrage et/ou une grille de protection.

16. Procédé pour faire fonctionner un système auto-grimpant (10) selon l'une des revendications précédentes, dans lequel, pour une opération de montée, le moyen d'entraînement est déplacé par rapport au rail de montée (12, 14), tandis que le moyen d'entraînement est bloqué au moins dans certaines sections dans la zone d'un sabot de montée (16, 16', 16") et/ou dans le sabot de montée (16, 16', 16").
